# EUROPEAN PATENT APPLICATION

(11) **EP 3 407 582 A1**
(43) Date of publication of application: **28.11.2018**
(21) Application number: 17172610.2
(22) Date of filing: 24.05.2017
(51) Int. Cl.: H04M 1/725, G07C 9/00, H04M 1/60

(54) **A METHOD OF, AND A MOBILE USER EQUIPMENT, UE, FOR, CONTROLLING FUNCTIONALITY OF THE MOBILE UE DURING USE OF A VEHICLE**

(71) Applicant: Koninklijke KPN N.V., 3072 AP Rotterdam (NL)
(72) Inventor: van Berkel, Louis Carsten, 1053 NN Amsterdam (NL); Leendertse, Stefan Johannes Hendrikus, 3022 XD Rotterdam (NL)
(74) Representative: Wuyts, Koenraad Maria

(57) **Abstract**

A method of controlling functionality of a mobile User Equipment, UE, wherein said UE is arranged for communicating with an access node of a telecommunication network and for alerting a user of said UE to communications received from said access node, wherein said UE is wirelessly coupled to a locking device for unlocking a vehicle, wherein said method comprises the steps of receiving, by said UE, an unlocking command that said locking device of said vehicle is to be unlocked, wirelessly transmitting, by said UE, in response to receiving said unlocking command an unlock signal to said locking device for unlocking said vehicle controlling said functionality of said UE by at least one of restricting communication abilities of said UE with said access node and restricting, by said UE, said alerting to communications received from said access node.

## Description

### Technical field

The present invention is generally related to mobile User Equipment, UE, that are used for locking, and unlocking, a vehicle. More specifically, the invention relates to a method of controlling the functionality of the mobile UE during use or intended use of the vehicle.

### Background

The popularity of mobile User Equipment, like smart phones, has grown rapidly over the last decades. It is estimated that, nowadays, a couple of billions of people all over the world own a smart phone. Such smart phones can be used for establishing a voice call, for exchanging text messages, for accessing the internet using a web browser, etc. These activities can be performed anywhere, for example at home, at the office, but also on the road.

It is generally considered unsafe to use a smartphone on the road. That is, drivers using a smart phone for talking, text messages, web browsing and/or for executing all kinds of applications, "apps", while driving are considered to be distracted which could lead to unsafe situations. Driving a bike, scooter, car, or any other type of vehicle, needs the full attention of the driver to substantially reduce the risk for accidents.

The above described safety issue has been recognized by many governments all over the world. A couple of governments have developed regulations for discouraging, or banning, the use of smartphones during driving a vehicle. For example, fines could be imposed to people that are caught using a smart phone while driving.

Another option for mitigating the risk of using a smart phone while driving is disclosed in CA2849718, wherein a system and a method is disclosed for sensor-based determination of user role, location, and/or state of one or more in-vehicle devices and enforcement usage thereof. One of the aspects that is mentioned here, is that the functions of a handset are turned off based on a detected speed of the handset.

One of the drawbacks of such a method and/or system may be that it is not completely accurate. For example, the functions of the mobile UE of passengers of the driver may also be switched off which is undesired. Another drawback may be that it does not work properly at low speeds.

### Summary

It is an objective to provide for methods of controlling functionality of a mobile User Equipment, UE, when a user uses or intends to use a vehicle.

It is another objective to provide for a mobile User Equipment, UE, for controlling the functionality of the UE, when a user uses or intends to use a vehicle.

In a first aspect, there is provided a method of controlling functionality of a mobile User Equipment, UE, wherein said UE is arranged for communicating with an access node of a telecommunication network and for alerting a user of said UE to communications received from said access node, wherein said UE is wirelessly coupled to a locking device for unlocking a vehicle.

The method comprises:
- receiving, by said UE, an unlocking command that said locking device of said vehicle is to be unlocked;
- wirelessly transmitting, by said UE, in response to receiving said unlocking command, an unlock signal to said locking device for unlocking said vehicle;
- controlling said functionality of said UE by at least one of:
   - restricting communication abilities of said UE with said access node;
   - restricting, by said UE, said alerting of communications received from said access node.

According to the presented method, the functionality of the UE is controlled by at least one of restricting the communication abilities of the UE with the access node and restricting the alerting to/of communications received from the access node, whenever the user uses or has provided an intention for using the vehicle.

The intention for using the vehicle is expressed by the unlocking command that the locking device of the vehicle is to be unlocked. The mobile UE thus receives an unlocking command for unlocking the locking device. As such, the vehicle cannot be used until the unlocking command is received, as the locking device locks the vehicle, i.e. the locking device remains in a locking state.

The unlocking command may be received in multiple manners. For example, a user may explicitly enter the unlocking command in the mobile UE, for example using an application, "app", installed on the mobile UE. The user then starts the app and provides its intention to use the vehicle via the app, for example via a swipe command. Alternatively or additionally, an application "app" on the UE may use Near Field Communication, NFC, to communicate with the locking device, and the user may provide the unlocking command by holding the UE physically near to the locking device.

Another option is that the unlocking command involves the locking device itself. That is, the locking device may, for example, periodically broadcast beacons. Here, it is assumed that a user intends to use the vehicle whenever the mobile UE is in range for receiving those beacons. The beacon is considered as the unlocking command that the locking device of the vehicle is to be unlocked. The underlying idea here is that a user intends to use the vehicle whenever the user is in the vicinity of the vehicle. Alternatively, the UE may broadcast beacons and the locking device may receive the beacons when in range. The locking device may transmit a signal when it receives the beacon, thus providing the unlocking command to the UE.

The unlocking command forms a trigger, for the UE, for wirelessly transmitting an unlock signal to the locking device for unlocking the vehicle. The unlock signal may be a direct copy of the unlocking command but may also be translated into a different type of message. The unlock signal should be a signal which can be understood, i.e. interpreted, by the locking device. That is, the unlock signal should be tailored to the type of locking device that is used.

It was the insight of the inventors that the functionality of the UE should be controlled once the user has indicated his intention to start using the vehicle. More specifically, the functionality of the UE should be controlled in such a way that it restricts the communication abilities of the UE with the access node and/or that it restricts the alerting of communication received from the access node.

One of the results hereof is that the user is no longer disturbed, i.e. distracted, by its mobile UE, during driving of the vehicle. For example, the mobile UE is no longer able to receive request messages for establishing a voice session, to receive text messages, to receive data messages and/or requests or anything alike. Such a restriction in communication abilities of the UE with the access node may be set in the UE itself or may be set in a network node of the telecommunication network, for example in the access node, or in a Policy and charging rules function, PCRF. Any restriction may exclude the ability to make emergency calls, or the ability to receive emergency alerts, e.g. on a Cell Broadcast channel.

A particular UE may, for example, receive a busy signal or busy tone in case that a particular user intends to establish a voice session to the mobile UE that is currently being restricted in functionality. The access node may, for example, indicate to that particular UE that the mobile UE is not reachable at this stage. Another option is that the mobile UE itself puts the mobile UE in some sort of offline mode or airplane mode in which the mobile UE is not able to receive any communications from the access node anymore. Pending messages may be delivered when the UE is reachable again.

As mentioned above, another option to controlling the functionality of the UE is that the UE restricts the alerting of communication received from the access node. For example, no limitations and/or restrictions may be imposed with respect to the communications between the mobile UE and the access node. However, any incoming communication, for example any incoming text message, incoming voice session request, etc., is not actively alerted to the UE. As such, the user is not made aware of such an incoming communication. This could, for example, be realised by setting the mobile UE into a restricted mode, e.g. a silent mode, i.e. a mode in which it does not produce any sound and/or vibration. This also has the effect that the user is not distracted whenever a communication is received.

In accordance with the present disclosure, the vehicle may preferably be a bicycle. The locking device is then a device which is able to unlock the bicycle by receiving a wireless command, i.e. unlock signal, to do so. As such, the locking device may be empowered by an auxiliary power supply like a battery, and may comprise receiving means for receiving the wireless command. The locking device may then automatically unlock the vehicle once the wireless command is received. In other examples, the vehicle is a car, a bus, a truck, a scooter or any other vehicle that is operable by a driver, and may be powered electrically and/or by fuel engine.

The locking device may take on different shapes and forms. The functionality of the locking device is that it is able to lock and unlock the vehicle such that it can be used by the driver. The locking device may be a physical apparatus for physically locking, for example the wheels, of the vehicle. Another option is that the locking device is construed as a software device for controlling whether the vehicle may be turned on or not. For example, in case of an electrically powered buke or scooter, the locking device may electronically prevent using the vehicle, or in case of a case, the locking device may electronically prevent the motor control system from starting the engine. In any such a case, the locking device may be directed to a software component running on a hardware device. That is, the controlling whether the vehicle may be turned on or not may be performed by an embedded system comprising, for example, Field Programmable Gate Arrays, FPGA's, micro processors or anything alike.

It is noted that, in accordance with the present disclosure, the mobile UE is wirelessly coupled to a locking device for locking and unlocking a vehicle. The mobile UE may, for example, be paired with the locking device to ensure that there is a correct relation between the mobile UE and the locking device. The pairing process to pair the mobile UE with the locking device is a process which is not described in detail in this disclosure. Any pairing process for pairing the locking device with the mobile UE suffices. For example, a pairing process as described in the IEEE standardized Bluetooth, i.e. IEEE 802.15.1, would be one of many options that could be used for pairing the locking device with the UE.

It is further noted that the mobile UE may be an apparatus capable of communicating with an access node of a telecommunication network. The mobile UE is, for example, a smart phone, a tablet, a smart watch or anything alike.

In accordance with the present disclosure, an access node may be any type of node residing in a radio access network, RAN, to which a mobile UE is connected. A typical example of such an access node is the evolved node B of a Long Term Evolution, LTE, network, a node B of a 3G network, or an access node of a 5G network.

In an embodiment, the method further comprises:
- receiving, by said UE, from said locking device, an acknowledgement message for acknowledging that said locking device is unlocked,
wherein said step of restricting said functionality is performed after receipt of said acknowledgement message.

In this particular situation, the locking device may comprise a transmitter for transmitting an acknowledgement message for acknowledging that the locking device is unlocked. As such, the acknowledgement message may not only acknowledge that the unlock signal is received, but may also acknowledge that the locking device is actually unlocked.

The advantage of this embodiment is that accuracy of the method is improved, e.g. to avoid restricting when the UE is not in range of the locking device. That is, it is more likely that a user is actually going to drive the vehicle once the acknowledgement message is received.

In a further embodiment, the step of controlling said functionality of said UE comprises:
- receiving, by said UE, from said user, a restriction command for restricting said functionality;
- entering, by said UE, said UE into a restricted mode, e.g. a silent mode;
- validating, by said UE, that said mobile has entered said restricted mode.

It is noted that the order in which the steps of controlling said functionality of the UE and wirelessly transmitting said unlock signal are to be performed may be interchanged. For example, the UE may first be controlled such that the communication abilities of the UE with the access node are restricted and/or such that the alerting to communications received from the access node is restricted. Once this is performed, the UE may decide to wirelessly transmit the unlock signal to the locking device. As such, the step of controlling the functionality may form the trigger for wirelessly transmitting the unlock signal to the locking device.

The above is in line with the embodiment disclosed. That is, the user needs to actively provide for a restriction command in which it expresses its desire to use the vehicle, i.e. to restrict the functionality of the mobile UE. The mobile UE will then enter itself into a restricted mode, e.g. a silent mode, and may then double check whether the mobile UE has actually entered that restricted mode. Upon confirmation of the restricted mode, the mobile UE may decide to transmit the unlock signal to the unlocking device.

The advantage hereof is that it is made clear that the mobile UE has entered a restricted mode, e.g. silent mode, before transmitting the unlock signal such that the reliability of the method is improved.

In a further embodiment, the restricting, by said UE, said alerting to communications received from said access node, comprises:
- disabling, by said UE, any one or more of a vibration alert and/or a sound alert to communication received from said access node.

Typically, the mobile UE has a couple of options for alerting a user to communications received from the access node. The UE may, for example, provide for a sound alert, i.e. a beep, and/or may provide a vibration alert. Both of these options accomplish that the user of the mobile UE is attended to the fact that a communication is received from the access node. By disabling any of these options, the user is no longer attended to a communication received from the access node such that the user will not get distracted. This does not necessarily mean that communications are no longer being received from the access node. It does mean that communications received from the access node are no longer alerted to the user.

In a further embodiment, the method further comprises:
- receiving, by said UE, a locking command that said locking device of said corresponding vehicle is to be locked;
- wirelessly transmitting, by said UE, in response to said received locking command, preferably via a Personal Area Network, PAN, a lock signal to said locking device for locking said corresponding vehicle;
- cancelling said restricting of said functionality of said UE.

The above disclosed embodiment is directed to the situation in which the driver intends to stop using the vehicle. In such a situation it may be desired that the functionality of the mobile UE is restored.

As such, in a first step, a locking command may be received by the UE for locking the corresponding vehicle. The locking command thus forms an indication that the vehicle is no longer to be used by the user. Typically, the locking command may be received, i.e. inputted, via an app installed on the mobile UE.

The mobile UE may wirelessly transmit, in response to the received locking command, a lock signal to the locking device for locking the corresponding vehicle. The locking device may, in turn, respond with an acknowledgement message as was the case for the unlock signal. As such, the locking device may transmit an acknowledgement message acknowledging that the vehicle is actually locked.

Finally, the restricting of the functionality of the UE may be cancelled such that the communication abilities of the UE with the access node are no longer restricted and/or such that the alerting to communication received from the access node is no longer restricted.

In a further embodiment, the wirelessly transmitting is based on a wireless technology according to any of:
- wireless Universal Serial Bus, USB;
- Bluetooth;
- Zigbee;
- Z-Wave;
- Infrared;
- Long Term Evolution, LTE;
- LTE Direct;
- Fifth Generation, 5G;
- WiFi;
- Near Field Communication, NFC.

It is noted that preferably a personal area network, PAN, is used. A personal area network is typically low-powered and carries traffic over a short-distance wireless technology. Examples of a PAN are wireless USB, Bluetooth, Z-wave and Zigbee. The advantage of such a PAN is that the user needs to be in the vicinity of the vehicle to actually start using the vehicle. Another advantage is that such networks are typically low-powered such that the lifespan of the battery in the locking device is increased.

In another embodiment, the restricting communication abilities of said UE with said access node comprises:
- restricting, by said telecommunication network, said communication abilities of said UE with said access node.

It is noted that the communication abilities of the UE with the access node can be restricted at the UE side but also at the telecommunication network side. The telecommunication network may, for example, decide that the mobile UE may no longer receive any communications from the access node during use of the vehicle, i.e. during the period in which the vehicle is unlocked. The telecommunication network has several options to do so.

One option is to implement such functionality in the access node to which the mobile UE is currently connected. Each communication directed to the mobile UE is then intercepted by the access node. The access node, thus, ensures that the mobile UE will not receive any communication. Another option is to implement such functionality in the Home Subscriber Server, HSS, of the user of the mobile UE. The subscription may, for example, be temporary modified such that the mobile UE will not be authorized to receive any communication. Yet another option is to implement such functionality in the PCRF by applying a restrictive policy. For example, using traffic detection (e.g. packet inspection detecting traffic to a certain Internet Protocol, IP, address, e.g. a configured IP address of a server related to the app), the PCRF may determine that a restrictive IP policy may be applied to communication directed to (or from) the mobile UE.

Entering said UE into the restricted mode or restricting the communication abilities of said UE with the access node may comprise transmitting an indication to the telecommunications network, by said UE, to restrict the telecommunication communication abilities of said UE with the access node. The indication may comprise a USSD message, an SMS message, or a message to an IP address. The indication may be generated by the app on the UE. The indication may be invisible to the user, or the UE may request the user to confirm sending the indication to the telecommunications network prior to sending. The message to an IP address may comprise transmitting a packet to an IP address that is related to the app on the UE. In that case the telecommunications network, e.g. the PCRF may be configured to detect the IP address and, when detected, to apply a restrictive IP policy that may block all or most of the IP traffic to (or from) the UE.

The expressions, i.e. the wording, of the different aspects comprised by the method according to the present disclosure should not be taken literally. The wording of the aspects is merely chosen to accurately express the rationale behind the actual functioning of the aspects. For example, an option in an app for the user to cancel restricting functionality may be equivalent to a locking command if the result is that the locking device is locked and the restriction is cancelled.

In accordance with the present disclosure, different aspects applicable to the above mentioned examples of the methods in a first aspect of the disclosure, including the advantages thereof, correspond to the aspects which are applicable to methods of the second aspect of the disclosure.

In a second aspect of the disclosure, there is provided a mobile User Equipment, UE, arranged for communicating with an access node of a telecommunication network and for alerting a user of said UE to communications received from said access node, wherein said UE is wirelessly coupled to a locking device for unlocking a corresponding vehicle, wherein said UE comprises:
- a receiver arranged for receiving an unlocking command that said locking device of said vehicle is to be unlocked;
- a transmitter arranged for wirelessly transmitting in response to receiving said unlocking command an unlock signal to said locking device for unlocking said vehicle;
- a processor and a memory arranged for controlling said functionality of said UE by at least one of:
   - restricting communication abilities of said UE with said access node;
   - restricting, by said UE, said alerting to communications received from said access node.

In an embodiment, the receiver is further arranged for:
- receiving, from said locking device, an acknowledgement message for acknowledging that said locking device is unlocked.

In a further embodiment, the UE comprises an input device, wherein said input device is arranged for:
- receiving, from said user, a control command for restricting said functionality.

In another embodiment, the processor is further arranged for:
- disabling, by said UE, any one or more of a vibration alert and/or a sound alert of communication received from said access node.

In yet a further embodiment, the receiver is further arranged for:
- receiving a locking command that said locking device of said vehicle is to be locked,
and wherein said transmitter is further arranged for:
- wirelessly transmitting, by said UE, in response to said received locking command, preferably via a Personal Area Network, PAN, a lock signal to said locking device for locking said vehicle;
and wherein said processor is further arranged for:
- cancelling said restricting of said functionality of said UE.

In yet another embodiment, the wirelessly transmitting is based on a wireless technology according to any of:
- wireless Universal Serial Bus, USB;
- Bluetooth;
- Zigbee;
- Z-Wave;
- Infrared.
- Long Term Evolution, LTE;
- LTE Direct;
- Fifth Generation, 5G;
- WiFi
- Near Field Communication, NFC.

In a third aspect of the present disclosure, there is provided a non-transitory computer-readable storage medium, comprising instructions which, when executed on at least one processor, cause the at least one processor to carry out the method according to any of the methods as disclosed above.

Any type of computer readable storage medium may be utilized. The computer readable storage medium may be, for example, but not limited to, an electronic, magnetic, optical, electromagnetic, infrared, or semiconductor system, apparatus, or device, or any suitable combination of the foregoing. More specific examples of the computer readable storage medium would include the following: an electrical connection having one or more wires, a portable computer diskette, a hard disk, a random access memory, RAM, a read-only memory, ROM, an erasable programmable read-only memory, a portable compact disc read-only memory, an optical storage device, a magnetic storage device, or any suitable combination of the foregoing.

In a fourth aspect of the present disclosure, there is provided a digital distribution platform server for apps on a mobile User Equipment, UE, wherein said platform comprises a non-volatile memory comprising a computer program product which comprises computer program code arranged for performing the method according to any of the examples as disclosed above.

In yet another aspect of the present disclosure, there is provided a method of controlling functionality of a mobile User Equipment, UE, wherein said UE is arranged for communicating with an access node of a telecommunication network and for alerting a user of said UE to communications received from said access node, wherein said UE is wirelessly coupled to a locking device for locking and unlocking a vehicle, the method comprising:
- receiving, by said UE, a locking command that said locking device of said vehicle is to be locked;
- wirelessly transmitting, by said UE, in response to said received locking command, preferably via a Personal Area Network, PAN, a lock signal to said locking device for locking said corresponding vehicle;
- controlling said functionality of said UE by at least one of:
   - cancelling a restricted communication ability of said UE with said access node;
   - cancelling, by said UE, a restricted alerting of communications received from said access node.

One advantage is that a user cannot forget to cancel restrictions on his UE, i.e. his smart phone. If a user has restricted a communication ability or alerting of received communications for safely using the UE in traffic, when the locking command is provided, the restrictions are cancelled automatically. Thus a user will be alerted again of communications and can communicate as normal. In similar embodiments as described above, where the restricting functionality is at least partially implemented in the telecommunications network, e.g. the access node, HSS or PCRF, the cancellation functionality may likewise be implemented in the telecommunications network, e.g. the access node, HSS or PCRF. In this case, the indication from the UE to the telecommunications network may have a different content, e.g. in the USSD or SMS message, or the indication may be addressed to a different IP address (that is e.g. configured in the PCRF to cancel the restricted IP policy for the UE.

The above-mentioned and other features and advantages of the disclosure will be best understood from the following description referring to the attached drawings. In the drawings, like reference numerals denote identical parts or parts performing an identical or comparable function or operation.

### Brief description of the drawings

Fig. 1 shows a basic concept of the method in accordance with the present disclosure.
Fig. 2 shows an embodiment of a mobile User Equipment in accordance with the present disclosure.
Fig. 3 shows an embodiment of a method in accordance with the present disclosure.

### Detailed description of the drawings

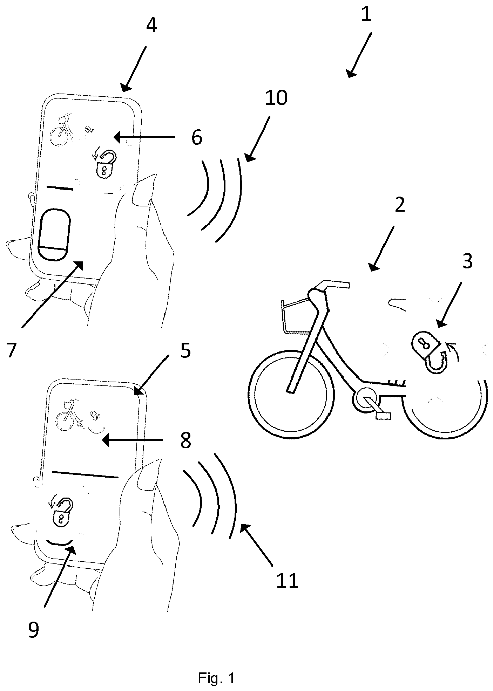

Fig. 1 shows a basic concept 1 of the method in accordance with the present disclosure. Here, it is assumed that the vehicle 2 is a bicycle 2. It is noted that the present disclosure may be applicable for a variety of vehicles like a car, a bus, a truck, a scooter, or anything alike. The bicycle 2 comprises a locking device 3 for locking and unlocking the bicycle.

In the present scenario, the locking device 3 is a bicycle lock 3 which is able to lock the rear wheel of the bicycle 2. A user is not able to ride, i.e. drive, the bicycle 2 whenever the bicycle 2 is locked. A user is able to ride, i.e. drive, the bicycle 2 whenever the bicycle 2 is unlocked.

The locking device 3 is, in accordance with the present disclosure, a device which is capable to wirelessly receive an unlock signal for unlocking the vehicle. In this context, unlocking means that the vehicle is ready to be used by a user. A locked vehicle means that the vehicle is not ready to be used by a user. Such two different states may be obtained in a variety of manners. One possibility is the bicycle lock 3 as disclosed in fig. 1. Other options include a software controlled lock, an immobilizer or anything alike.

These other options are especially of interest in case the vehicle is a motorized vehicle like a car or a truck. In such a case, the vehicle may often be started using software controlled components residing in the vehicle. The locking device may comprise software controlled functionality residing in these components of the vehicle to lock and unlock the vehicle in accordance with lock signals and unlock signals received from the UE.

Fig. 1 shows two different states of the mobile User Equipment as indicated with reference numerals 4 and 5, respectively. Reference numeral 5 discloses the scenario in which the user unlocks the bicycle 2 such that the bicycle can be used. Reference numeral 4 discloses the scenario in which the user locks the bicycle 2 such that the bicycle is not to be used by the user. Both scenarios 4, 5 are elucidated here below.

First, consider the scenario as indicated with reference numeral 5. In a first step, the UE has received an unlocking command that the locking device 3 of the bicycle 2 is to be unlocked. Such an unlocking command is, for example, a swiping action of the user over the touch screen of the UE 5. One option is that a dedicated app is installed on the mobile UE, wherein the dedicated app is able to receive such an unlocking command via the touch screen. In the present situation, the user may have touched the bicycle 8 as disclosed on the touch screen to express his desire to use the bicycle 2. The app may then further show 9 that the mobile UE itself is to be locked for safety purposes.

As such, the UE wirelessly transmits 11, in response to receiving the unlocking command, an unlock signal to the locking device 3 for unlocking the bicycle 2. The unlock signal may be based on a variety of wireless techniques such as, for example, Bluetooth, Zigbee, Wireless USB, etc.

The locking device 3 receives the unlock signal and unlocks the bicycle 2. A pairing process between the mobile UE 5 and the bicycle 2 may be performed initially to ensure that the actual owner of the bicycle is transmitting the unlock signal. The pairing process is not explained in detail.

The functionality of the UE may be controlled once the unlock signal is transmitted towards the locking device 3. That is, the communication abilities of the UE with the access node is restricted and/or the alerting of communications received from the access node is restricted. This is depicted in fig. 1 with the reference numeral 9 as a graphical example. Optionally, this restricting may take place before transmitting the unlock signal.

The advantage hereof is that the user is no longer disturbed during driving of the vehicle, i.e. riding of the bicycle 2. This, thus, improves the safety of the bicyclist, but also the safety of other traffic.

Second, consider the scenario as indicated with reference numeral 4. In this particular situation, the user expresses his intention to lock the vehicle again, i.e. the lock the bicycle 2. The mobile UE 8 thus receives a locking command, from the user, that the locking device 3 of the corresponding vehicle is to be locked. The locking command may be received via the touch screen of the mobile UE 4.

The mobile UE 3 then wirelessly transmits 10, in response to said received locking command, a lock signal to the locking device 3 for locking the corresponding bicycle 2. Finally, any imposed restriction on the functionality of the UE 4 is released such that the UE 4 operates as normal again. This is indicated with reference numeral 7 which addresses a mobile UE without a lock in it.

In the above described scenario's, it is preferred that the wireless technology used for sending the lock signal and the unlock signal is a technology used for small ranged applications. This ensures that a user is actually physically in the vicinity of the vehicle whenever the vehicle receives a lock signal or an unlock signal. This improves the reliability of the system. Such wireless technologies are, for example, Bluetooth, Zigbee and Infrared.

In accordance with the present disclosure, the mobile UE 4, 5 is, preferably, a smart phone or a tablet. The different embodiments of the method may be performed by an application, i.e. "app", installed on the mobile UE 4, 5. It is noted that the different embodiments of the method may also be performed by the operating system of the mobile UE 4, 5.

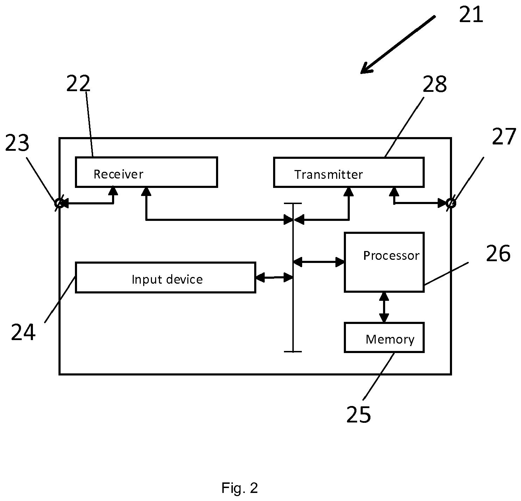

Fig. 2 shows an embodiment of a mobile User Equipment 21 in accordance with the present disclosure.

The mobile User Equipment, UE, 21 is arranged for communicating with an access node of a telecommunication network and for alerting a user of said UE to communications received from said access node.

The access node is, for example, a base station, an evolved node B or anything alike. The access node is typically present in the radio access network of the telecommunication network. As such, the access node is the node which is directly communicating with the mobile UE 21.

The UE 21 is wirelessly coupled to a locking device for locking and unlocking a corresponding vehicle. This could mean that the UE 21 is paired with a specific locking device. For example, a unique identification of the locking device is programmed into the mobile UE 21, which unique identification is used between communications from the mobile UE 21 and the locking device.

The mobile UE 21 comprises a receiver 22 arranged for receiving an unlocking command that said locking device of said vehicle is to be unlocked. The mobile UE 21 comprises a transmitter 28 arranged for wirelessly transmitting in response to receiving said unlocking command an unlock signal to said locking device for unlocking said vehicle.

Here, incoming data packets, or messages, pass through the input terminal 23 before they reach the receiver 22, or receiving module. Outgoing data packets or messages pass or are sent by the transmitter 28, or broadcast module, via the output terminal 27.

The mobile UE 21 further comprises a processor and a memory arranged for controlling said functionality of said UE by at least one of restricting communication abilities of said UE with said access node and restricting, by said UE, said alerting to communications received from said access node.

Optionally, the mobile UE 21 comprises an input device 24, wherein said input device is arranged for receiving, from said user, a control command for restricting said functionality. The input device 24 is, for example, a touch screen of the mobile UE 24, or an NFC interface that may communicate with the locking device via NFC when the UE is physically held near to the locking device by the user.

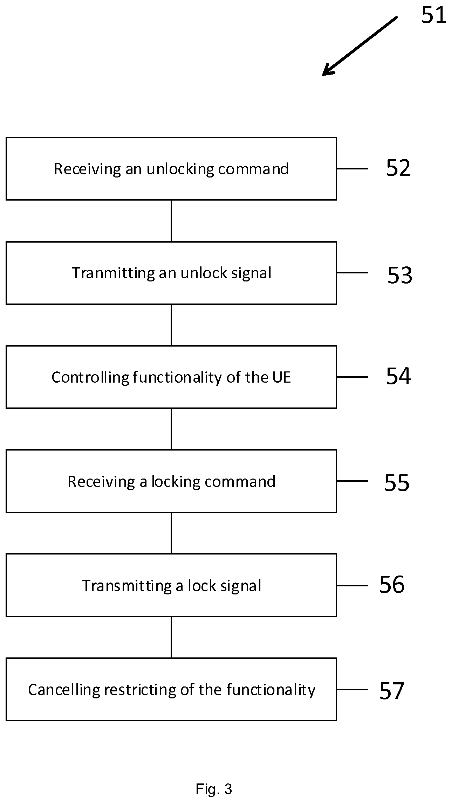

Fig. 3 shows an embodiment of a method 52 in accordance with the present disclosure.

The method 51 is for controlling functionality of a mobile User Equipment, UE, wherein said UE is arranged for communicating with an access node of a telecommunication network and for alerting a user of said UE to communications received from said access node, wherein said UE is wirelessly coupled to a locking device for locking and unlocking a vehicle

The method 51 comprises the steps of
- receiving 52, by said UE, an unlocking command that said locking device of said vehicle is to be unlocked;
- wirelessly transmitting 53, by said UE, in response to receiving said unlocking command an unlock signal to said locking device for unlocking said vehicle;
- controlling 54 said functionality of said UE by at least one of:
   - restricting communication abilities of said UE with said access node;
   - restricting, by said UE, said alerting to communications received from said access node.
- receiving 55, by said UE, a locking command that said locking device of said corresponding vehicle is to be locked;
- wirelessly transmitting 56, by said UE, in response to said received locking command, preferably via a Personal Area Network, PAN, a lock signal to said locking device for locking said corresponding vehicle;
- cancelling 57 said restricting of said functionality of said UE.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope thereof.

## Claims

1. A method (51) of controlling functionality of a mobile User Equipment, UE (21, 4, 5), wherein said UE is arranged for communicating with an access node of a telecommunication network and for alerting a user of said UE to communications received from said access node, wherein said UE is wirelessly coupled to a locking device (3) for unlocking a vehicle (2), wherein said method comprises:
- receiving (52), by said UE, an unlocking command that said locking device of said vehicle is to be unlocked;
- wirelessly transmitting (53), by said UE, in response to receiving said unlocking command, an unlock signal to said locking device for unlocking said vehicle;
- controlling (54) said functionality of said UE by at least one of:
- restricting communication abilities of said UE with said access node;
- restricting, by said UE, said alerting of communications received from said access node.

2. A method of controlling functionality of a UE according to claim 1, wherein said method further comprises:
- receiving, by said UE, from said locking device, an acknowledgement message for acknowledging that said locking device is unlocked,
wherein said step of restricting said functionality is performed after receipt of said acknowledgement message.

3. A method of controlling functionality of a UE according to any of the previous claims, wherein said controlling said functionality of said UE comprises:
- receiving, by said UE, from said user, a restriction command for restricting said functionality;
- entering, by said UE, said UE into a restricted mode;
- validating, by said UE, that said UE has entered said restricted mode.

4. A method of controlling functionality of a UE according to any of the previous claims, wherein said restricting, by said UE, said alerting of communications received from said access node, comprises:
- disabling, by said UE, any one or more of a vibration alert and/or a sound alert to communication received from said access node.

5. A method of controlling functionality of a UE according to any of the previous claims, wherein said method further comprises:
- receiving (55), by said UE, a locking command that said locking device of said corresponding vehicle is to be locked;
- wirelessly transmitting (56), by said UE, in response to said received locking command, preferably via a Personal Area Network, PAN, a lock signal to said locking device for locking said corresponding vehicle;
- cancelling (57) said restricting of said functionality of said UE.

6. A method of controlling functionality of a UE according to any of the previous claims, wherein said wirelessly transmitting is based on a wireless technology according to any of:
- wireless Universal Serial Bus, USB;
- Bluetooth;
- Zigbee;
- Z-Wave;
- Infrared;
- Long Term Evolution, LTE;
- LTE Direct;
- Fifth Generation, 5G;
- WiFi;
- Near Field Communication, NFC.

7. A method of controlling functionality of a UE according to any of the previous claims, wherein said restricting communication abilities of said UE with said access node comprises:
- restricting, by said telecommunication network, said communication abilities of said UE with said access node.

8. A mobile User Equipment, UE (21, 4, 5), arranged for communicating with an access node of a telecommunication network and for alerting a user of said UE to communications received from said access node, wherein said UE is wirelessly coupled to a locking device (3) for unlocking a corresponding vehicle (2), wherein said UE comprises:
- a receiver (22) arranged for receiving an unlocking command that said locking device of said vehicle is to be unlocked;
- a transmitter (28) arranged for wirelessly transmitting in response to receiving said unlocking command an unlock signal to said locking device for unlocking said vehicle;
- a processor (26) and a memory (25) arranged for controlling said functionality of said UE by at least one of:
- restricting communication abilities of said UE with said access node;
- restricting, by said UE, said alerting of communications received from said access node.

9. A User Equipment, UE, according to claim 8, wherein said receiver is further arranged for:
- receiving, from said locking device, an acknowledgement message for acknowledging that said locking device is unlocked.

10. A User Equipment, UE, according to any of the claims 8 - 9, further comprising an input device (24), wherein said input device is arranged for:
- receiving, from said user, a control command for restricting said functionality.

11. A User Equipment, UE, according to any of the claims 8 - 10, wherein said processor is further arranged for:
- disabling, by said UE, any one or more of a vibration alert and a sound alert of communication received from said access node.

12. A User Equipment, UE, according to any of the claims 8 - 11, wherein said receiver is further arranged for:
- receiving a locking command that said locking device of said vehicle is to be locked,
and wherein said transmitter is further arranged for:
- wirelessly transmitting, by said UE, in response to said received locking command, preferably via a Personal Area Network, PAN, a lock signal to said locking device for locking said vehicle;
and wherein said processor is further arranged for:
- cancelling said restricting of said functionality of said UE.

13. A UE according to any of the claims 8 - 12, wherein said wirelessly transmitting is based on a wireless technology according to any of:
- wireless Universal Serial Bus, USB;
- Bluetooth;
- Zigbee;
- Z-Wave;
- Infrared.
- Long Term Evolution, LTE;
- LTE Direct;
- Fifth Generation, 5G;
- WiFi;
- Near Field Communication, NFC.

14. A non-transitory computer-readable storage medium, comprising instructions which, when executed on at least one processor, cause the at least one processor to carry out the method according to any of the claims 1 - 7.

15. A digital distribution platform server for apps on a mobile User Equipment, UE, wherein said platform comprises a non-volatile memory comprising a computer program product which comprises computer program code arranged for performing the method according to any of the claims 1 - 7 when executed on the UE.
